# EUROPÄISCHE PATENTSCHRIFT

(11) **EP 2 993 079 B1**
(45) Veröffentlichungstag und Bekanntmachung des Hinweises auf die Patenterteilung: **25.03.2020**
(21) Anmeldenummer: 15183548.5
(22) Anmeldetag: 02.09.2015
(51) Int. Cl.: B60P 1/64

(54) **VORRICHTUNG ZUM AUFLADEN UND ABLADEN VON CONTAINERN**
DEVICE FOR LOADING AND UNLOADING CONTAINERS
DISPOSITIF DE CHARGEMENT ET DE DÉCHARGEMENT DE CONTENEURS

(30) Priorität: 02.09.2014 DE 102014012761
(43) Veröffentlichungstag der Anmeldung: 09.03.2016
(73) Patentinhaber: Weber, Heinz, 54518 Arenrath (DE)
(72) Erfinder: Weber, Heinz, 54518 Arenrath (DE)
(74) Vertreter: Westphal, Mussgnug & Partner Patentanwälte mbB

(56) Entgegenhaltungen:
- WO-A1-2008/155471
- DE-T2- 60 026 790
- DE-U1-202014 007 007
- US-A- 2 485 300
- US-A- 4 318 658
- US-A1- 2010 303 594
- US-A1- 2011 318 148
- US-B1- 7 568 881

## Beschreibung

Die vorliegende Erfindung betrifft ein Straßenfahrzeug (2), mit einer Vorrichtung (1, 1') zum zumindest grob in Fahrtrichtung (F) ausgerichteten Aufladen und Abladen von Abrollcontainern (21) auf ein oder von einem Rahmengestell (5) des wenigstens eine Radachse (4, 4a) aufweisenden Straßenfahrzeugs (2),

Derartige Wechsellader-Einrichtungen sind bekannt und beispielsweise in der DIN 30 722, DE 100 09 854 A1 oder DE 600 26 790 T2 beschrieben. Mit einer Wechsellader-Einrichtung kann ein Behälter auf ein Transportfahrzeug aufgesetzt und von diesem abgesetzt, entleert und auf dem Fahrzeug gesichert werden. Üblicherweise ist der Behälter mit der Wechsellader-Einrichtung durch eine Verriegelung verbunden. Die aus Wechsellader-Einrichtung und Behälter bestehende Einheit wird beispielsweise mittels einer auf dem Transportfahrzeug angebrachten maschinellen Zugeinrichtung auf das Fahrzeug aufgeladen bzw. abgeladen. Der Behälter ist im Allgemeinen als Abrollbehälter ausgeführt, der zwei hinten außenliegende, wartungsarme Rollen aufweist, so dass der Behälter während des Aufladevorgangs, bzw. Abladevorgangs nicht auf dem Boden schleift. Durch eine Wechsellader-Einrichtung erübrigt sich das Anbringen eines Krans auf dem Transportfahrzeug bzw. das Bereitstellen eines solchen am jeweiligen Ort des Aufsetzens und Absetzens des Behälters. Ein solcher Kran wäre aufwendig und teuer in der Herstellung und würde die auf dem Transportfahrzeug vorhandene Ladekapazität einschränken, wenn er darauf angebracht wäre.

Aus der US 3,892,323 ist beispielsweise eine Vorrichtung zur Handhabung von Behältern für ein selbstladendes Fahrzeug bekannt, welche einen gelenkig um eine erste Querachse gelagerten schwenkbaren Verbindungsrahmen an einem hinteren Teil des Fahrzeugchassis aufweist, auf welchem sich der Behälter verschiebbar abstützt, wenn dieser von einem L-förmigen Element geladen oder entladen wird. Der Behälter weist unter seinem Boden ein Paar von beabstandeten Längsträgern auf, um in einen entsprechenden Führungseingriff mit vorgesehenen Rollen des kippbaren Drehgestells auf jeder Seite des hinteren Teils des Fahrzeugrahmens zu gelangen.

In der US 4,147,266 ist beispielsweise ein Sattelanhänger für die Handhabung und den Transport von standardisierten Containern beschrieben, der einen Hauptrahmen und einen Schwenkrahmen aufweist, die miteinander durch vordere Verbindungsstangen und hintere Verbindungsstangen verbunden sind. Die hinteren Verbindungsstangen bilden eine Querachse, die in Öffnungen in dem Schwenkrahmen aufgenommen sind. Eine vorgesehene Halterung, deren freies Ende eine Querschwenkstange aufweist, welche dazu vorgesehen ist, um die vorderen oberen Eckbeschläge eines standardisierten Containers, insbesondere Frachtcontainern, zu ergreifen.

Die CA 1,291,071 beschreibt ferner einen Mechanismus zum Laden und Entladen von Frachtcontainern auf ein und von einem Straßenfahrzeug. Die CA 1,291,071 offenbart ein Straßenfahrzeug zum Beladen und Entladen von Frachtcontainern, wobei ein schwenkbarer Rahmen an der Rückseite des Fahrzeugs angeordnet ist, welcher einen Schlitten mit einem Paar von Klammern aufweist, welcher wiederum dazu eingerichtet sind, in die unteren vorderen Eckbeschläge des Frachtcontainers eingreifen.

Der vorliegenden Erfindung liegt die Aufgabe zugrunde, Nachteile der bekannten Vorrichtungen zu beseitigen, insbesondere den Einsatzbereich der Vorrichtung zum Aufladen und Abladen von Containern zu vergrößern.

Die Aufgabe wird erfindungsgemäß mittels einer Vorrichtung und/oder ein gezogenes Straßenfahrzeug gemäß den nebengeordneten Hauptansprüchen gelöst.

Vorteilhafte Ausführungsformen sind in den jeweiligen Unteransprüchen angegeben.

Der Gegenstand des Hauptanspruchs betrifft dabei ein Straßenfahrzeug mit einer Vorrichtung zum Aufladen und Abladen von Abrollcontainern auf ein oder von einem Rahmengestell des wenigstens eine Fahrzeugachse aufweisenden Straßenfahrzeugs. In einem Bereich eines hinteren Endes des Rahmengestells sind zwei seitlich angeordnete Führungsrollen zur Führung des Containers vorgesehen, welche Führungsrollen mit am Boden des Containers angeordneten Kufen ineinandergreifen, und über welches Ende des Rahmengestells hinweg der Abrollcontainer aufgeladen und abgeladen wird. Die Vorrichtung weist eine auf einem Rahmengestell der Vorrichtung angeordnete kippbare und/oder schwenkbare Containerbewegungseinrichtung auf, welche ferner ein Greifermittel aufweist. Das Greifermittel ist dazu eingerichtet, während des Aufladens und Abladens des Containers ein Halteelement des Containers zu greifen. Das Greifermittel ist hierbei bevorzugt mittig auf der Containerbewegungseinrichtung angeordnet. Das Rahmengestell des gezogenen Fahrzeugs weist einen um eine Gelenkachse nach unten hin abknickbaren Abschnitt auf.

Erfindungsgemäß weist das Rahmengestell einen um eine parallel zur Radachse angeordnete Gelenkachse abknickbaren Abschnitt auf, wobei die Gelenkachse und damit der abknickbare Abschnitt des Rahmengestells in einem Bereich des hinteren Endes des Rahmengestells angeordnet ist, nämlich hinter der in Vorwärtsfahrtrichtung gedacht hintersten Fahrzeugachse angeordnet ist. Die Containerbewegungseinrichtung weist einen Schienenträger mit einem darin geführten beweglichen Schlitten für das Greifermittel, einem außerdem separat darin geführten Triebelement, einem freien vorderen Ende und einem an dem Rahmengestell gelenkig angebundenen hinteren Ende und einen in Bewegungsrichtung des Schlittens zwischen einem der Enden des Schienenträgers und dem Triebelement wirkenden bidirektionalen Hubzylinder als ein Mittel zur Längsverschiebung des Schlittens auf. Der abknickbare Abschnitt ist mit dem Schienenträger verbunden, nämlich mit dessen an den abknickbaren Abschnitt angebundenen hinteren Ende. Der abknickbare Abschnitt weist der Gelenkachse gegenüberliegend unten ein Stützelement und oben die gelenkige Aufnahme des Schienenträgers auf.

Ein Straßenfahrzeug im Sinne der Erfindung bezeichnet dabei allgemein ein Fahrzeug, welches zum Einsatz des Transportes entsprechender Container auf der Straße und/oder straßenähnlichen Wegen, allgemein insbesondere auf dem Land, eingerichtet und/oder zugelassen ist.

Eine Containerbewegungseinrichtung im Sinne der Erfindung bezeichnet allgemein eine Einrichtung zum Aufladen und Abladen eines Containers, welche insbesondere dazu eingerichtet ist, einen Container, bevorzugt einen Abrollcontainer, an einem hierzu vorgesehenen Halteelement zu halten und in der Weise aufzuladen oder abzuladen, dass sich der Container über eine an einem dem Halteelement gegenüberliegenden Ende des Containers angeordnete Schiene oder Rolle zuerst, bzw. zuletzt am Boden abstützt.

Ein Greifermittel im Sinne der Erfindung bezeichnet allgemein ein Mittel zum Greifen eines Halteelementes eines Containers. Hierbei kann es sowohl vorgesehen sein, dass das Halteelement durch ein aktives Schließen des Greifermittels in diesem gehalten ist, oder aber durch die auf dem Container wirkende Schwerkraft in dem Greifermittel gehalten ist. Ein derartiges Halteelement kann beispielsweise in Form einer geschlossenen Öse oder eines offenen Hakens ausgebildet sein. Weitere Formen, die ein formschlüssiges Ergreifen mittels eines korrespondierenden Greifermittels ermöglichen, sind ebenso denkbar.

Das Rahmengestell ist als Teil des Chassis zu begreifen.

Durch die erfindungsgemäße Lehre wird der Vorteil erreicht, dass durch das Abknicken des Rahmengestells sowohl während des Abladens, als auch des Aufladens, die hierzu benötigte maximale Höhe und Bewegungsfreiheit der Vorrichtung, insbesondere im Vergleich zu herkömmlichen Vorrichtungen, reduziert ist. So ergibt sich, beispielsweise während des Abladens, dass der Kontaktpunkt des Containers mit dem Rahmengestell, insbesondere im Bereich des abknickbaren Abschnitts, durch das Abknicken nach unten in Richtung des Bodens abgesenkt ist, wodurch der Container in vorteilhafter Weise in einem flacheren Winkel zum Boden hin abgeladen werden kann. Hierdurch lassen sich derartige Container beispielsweise in bisher nicht erreichbaren Umgebungen, wie beispielsweise in einer Tiefgarage oder einem Parkhaus mit einer vorgegebenen Deckenhöhe einsetzen.

Nachfolgend werden weitere exemplarische Ausgestaltungen der erfindungsgemäßen Vorrichtung erläutert.

Entsprechend einer ersten exemplarischen Ausgestaltung der Vorrichtung ist der abknickbare Abschnitt des Rahmengestells in einem Bereich des hinteren Endes des Rahmengestells angeordnet.

Unter dem hinteren Ende des Rahmengestells im Sinne der Erfindung ist allgemein das Ende des Rahmengestells bezeichnet, über welches hinweg der Container aufgeladen und/oder abgeladen wird. Am Beispiel eines Straßenfahrzeugs in Form eines Lastkraftwagens mit einem entsprechenden Rahmengestell hinter dem Führerhaus des Lastkraftwagens, ist mit dem hinteren Ende des Rahmengestells das vom Führerhaus wegweisende Ende des Rahmengestells bezeichnet.

Diese Ausgestaltung weist den Vorteil auf, dass durch den restlichen Teil des Rahmengestells, welcher nicht abknickbar ist, weiterhin eine erforderliche Stabilität und Sicherheit zum Aufnehmen und Befördern von Lasten im Straßenverkehr bereitgestellt werden kann.

Entsprechend einer weiteren exemplarischen Ausgestaltung der Vorrichtung ist die Gelenkachse des Rahmengestells in einem Bereich hinter der hintersten Fahrzeugachse angeordnet.

Diese Ausgestaltung weist den Vorteil auf, dass beim Abladen und/oder Aufladen eines Containers das Straßenfahrzeug mit seinem Eigengewicht vor der Gelenkachse über die hinterste Fahrzeugachse gelagert dem Gewicht des Containers entgegenwirken kann, wodurch ein Anheben oder gar ein Abheben des vorderen Endes des Straßenfahrzeuges vermindert, wenn nicht sogar ganz verhindert, werden kann.

Entsprechend einer weiteren exemplarischen Ausgestaltung der Vorrichtung weist der abknickbare Abschnitt des Rahmengestells ein Stützelement auf.

Das Stützelement kann hierbei beispielsweise ausfahrbar oder ausklappbar oder aber auch starr an dem abknickbaren Abschnitt angeordnet sein und bevorzugt dazu eingerichtet den abknickbaren Abschnitt, insbesondere an dem der Gelenkachse gegenüberliegenden Ende des Abschnitts, gegenüber dem Boden abzustützen.

Diese Ausgestaltung weist den Vorteil auf, dass der abknickbare Abschnitt eine höhere Tragkraft zur Aufnahme schwererer Lasten erhält. Hierdurch kann beispielsweise in einer Phase des Abladevorgangs oder auch des Aufladevorgangs, in welchem der Container noch nicht den Boden berührt, das Gewicht des Containers entsprechend der Position seines Schwerpunktes über die hinterste Fahrzeugachse und/oder über das Stützelement getragen werden, wodurch in vorteilhafter Weise die Containerbewegungseinrichtung entlastet werden kann.

Entsprechend einer weiteren exemplarischen Ausgestaltung der Vorrichtung ist die Gelenkachse parallel zu einer Fahrzeugachse und bevorzugt senkrecht zur Längsrichtung der Containerbewegungseinrichtung angeordnet.

Diese Ausgestaltung weist den Vorteil auf, dass ein gleichmäßiges Abknicken des Abschnitts des Rahmengestells gewährleistet werden kann, wodurch beispielsweise ein Umkippen des Containers beim Abladen und/oder Aufladen verhindert wird.

Entsprechend einer weiteren exemplarischen Ausgestaltung der Vorrichtung ist das Greifermittel in Richtung des hinteren Endes des Rahmengestells abklappbar.

Diese Ausgestaltung weist den Vorteil auf, dass besonders in der letzten Phase des Abladevorgangs und/oder in der ersten Phase des Aufladevorgangs, in welcher das Greifermittel mit einem entsprechenden Halteelement des Containers in Kontakt gebracht werden soll, durch ein entsprechendes Abklappen des Greifermittels in vorteilhafter Weise ein weiteres Aufstellen des Schienenträgers verhindert werden kann, wodurch dich Abermals die benötigte Raumhöhe und/oder der benötigte Bewegungsfreiraum der Containerbewegungseinrichtung reduzieren lässt.

Entsprechend einer weiteren exemplarischen Ausgestaltung der Vorrichtung weist die die Containerbewegungseinrichtung ferner einen Schienenträger mit einem daran angeordneten beweglichen Schlitten sowie einem Mittel zur Längsverschiebung des Schlittens entlang der Oberseite des Schienenträgers auf.

Ein Mittel zur Längsverschiebung im Sinne der Erfindung bezeichnet allgemein eine Einrichtung zur Erzeugung und/oder Übertragung von Bewegungsenergie auf den Schlitten, um diesen relativ zum Schienenträger zu bewegen. Das Mittel zur Längsverschiebung kann hierbei beispielsweise in Form einer Gewindespindel, eines Zahnstangenantriebes, einer Kette oder eines Seiles ausgebildet sein. Andere Formen einer Erzeugung und/oder Übertragung eines linearen Antriebes sind ebenfalls denkbar und nicht ausgeschlossen.

Diese Ausgestaltung weist den Vorteil auf, dass beispielsweise Container mit der halben Länge sicherer aufgeladen werden können, da diese entlang Schienenträgers, wenn dieser horizontal auf dem Rahmengestell aufliegt, verschoben werden können und sich hierdurch die Neigung des Containers mit halber Länge beim Aufladen und Abladen abermals minimieren lässt, wodurch ein Herausfallen von Transportgut aus dem Container beim Aufladen und Abladen vermieden werden kann.

Entsprechend einer weiteren exemplarischen Ausgestaltung der Vorrichtung ist der Schlitten in Längsrichtung des Schienenträgers zwischen einem vorderen Ende und einem hinteren Ende des Schienenträgers hin und her verschiebbar, insbesondere linear verschiebbar.

Diese Ausgestaltung weist den Vorteil auf, dass der Schlitten auf dem Schienenträger in Abladerichtung und/oder Aufladerichtung des Containers bewegt werden kann um den Container entlang der Längsrichtung des Schienenträgers zu ziehen und oder zu schieben. Hierdurch wird es beispielsweise zum Abladen ermöglicht, zunächst einen Teil des Containers über das hintere Ende des Rahmengestells hinaus zu verschieben, um bevorzugt einen Schwerpunkt des Containers näher an die Gelenkachse, in welcher der abknickbare Abschnitt des Rahmengestells gelagert ist, heranzubringen. Hierdurch kann der Container abermals in einem flacheren Winkel aufgeladen und/oder abgeladen werden.

Entsprechend einer weiteren exemplarischen Ausgestaltung der Vorrichtung ist der Containerbewegungseinrichtung in Längsrichtung um eine Kippachse kippbar.

Diese Ausgestaltung weist den Vorteil auf, dass der Container zusammen mit der Containerbewegungseinrichtung kontrolliert gekippt werden kann, wodurch auch ein schwer beladener Container kontrollierter und sicherer Abgeladen und/oder Aufgeladen werden kann.

Entsprechend einer weiteren exemplarischen Ausgestaltung der Vorrichtung ist ein Schwenkmittel zum Schwenken der Containerbewegungseinrichtung relativ zum Rahmengestell vorgesehen.

Diese Ausgestaltung weist den Vorteil auf, dass ein entsprechender Container, welcher beispielsweise über eine hintere Entladeöffnung verfügt, durch ein Aufstellen der Containerbewegungseinrichtung zusammen mit dem Container in eine ähnlichen Funktionsweise wie beispielsweise der eines Muldenkippers den Container bei geöffneter Entladeöffnung ausschütten und/oder auskippen kann.

Entsprechend einer weiteren exemplarischen Ausgestaltung der Vorrichtung ist das Schwenkmittel zwischen dem Rahmengestell und der Containerbewegungseinrichtung angeordnet.

Diese Ausgestaltung weist den Vorteil auf, dass über die jeweiligen Lagerpunkte des Schwenkmittels und der Containerbewegungseinrichtung am Rahmengestell, sowie miteinander, ein entsprechendes Kräftedreieck aufgebaut werden kann, welche die Tragfähigkeit der Containerbewegungseinrichtung weiter erhöht.

Entsprechend einer weiteren exemplarischen Ausgestaltung der Vorrichtung ist das Straßenfahrzeug ein an eine Zugmaschine ankoppelbarer Anhänger.

Eine Zugmaschine im Sinne der Erfindung bezeichnet allgemein ein Kraftfahrzeug mit einer entsprechenden Kupplungsvorrichtung zum Ankuppeln des Anhängers. Dies kann beispielsweise ein Personenkraftwagen, ein Traktor oder ein Lastkraftwagen mit einer entsprechenden Anhängerkupplung, oder aber auch ein sogenannter Sattelauflieger sein.

Diese Ausgestaltung weist den Vorteil auf, dass beispielsweise an einen Lastkraftwagen mit einer erfindungsgemäßem Vorrichtung auf der Ladefläche ein Anhänger mit einer weiteren Vorrichtung angehangen werden kann, wodurch sich gleichzeitig bis zu zwei Container transportieren lassen.

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Die Figuren zeigen:
- Figur 1: eine perspektivische Darstellung einer vorgeschlagenen Vorrichtung gemäß einer beispielhaften Ausgestaltung der Erfindung;
- Figuren 2a und 2b: eine schematische Darstellung einer Seitenansicht auf eine Vorrichtung gemäß einer beispielhaften Ausgestaltung der Erfindung;
- Figur 3: eine schematische Schnittdarstellung durch ein Rahmengestell gemäß einer beispielhaften Ausgestaltung der Erfindung;
- Figur 4: eine schematische Seitenansicht einer Vorrichtung gemäß einer beispielhaften Ausgestaltung der Erfindung;
- Figuren 5a bis 5d: eine schematische Darstellung einer Vorrichtung gemäß einer beispielhaften Ausgestaltung der Erfindung in unterschiedlichen Phasen des Abladevorgangs und/oder Aufladevorgangs;
- Figur 6: eine perspektivische Ansicht auf ein weiteres Ausführungsbeispiel eine erfindungsgemäßen Vorrichtung in separater Darstellung ohne Straßenfahrzeug, wobei das Weglassen diverser Bestandteile den Einblick auf wirkende Teile gestattet;
- Figur 7: eine perspektivische Ansicht auf ein Distanzstück in separater Darstellung;
- Figur 8a: eine perspektivische Ansicht auf die Vorrichtung aus Figur 6, wobei nun zusätzlich auf die Darstellung des Distanzstückes und eines Hubzylinders verzichtet worden ist, um weiteren Einblick zu gestatten;
- Figur 8b: eine weitere perspektivische Ansicht auf die Vorrichtung aus Figur 8a;
- Figur 9a: eine Seitenansicht auf die Vorrichtung aus Figur 6, wobei das Greifermittel nach hinten gefahren ist;
- Figur 9b: eine Draufsicht auf die Vorrichtung aus Figur 6 ohne Darstellung des Distanzstücks, sodass der Blick auf den Hubzylinder gestattet ist;
- Figur 10: die Vorrichtung aus Figur 6 gemäß Figur 9 in Seitenansicht und Draufsicht, wobei das Greifermittel in eine mittlere Position gefahren ist;
- Figur 11: die Vorrichtung aus Figur 6 gemäß den Figuren 9 und 10 in Seitenansicht und Draufsicht, wobei das Greifermittel in eine vordere Position gefahren ist.

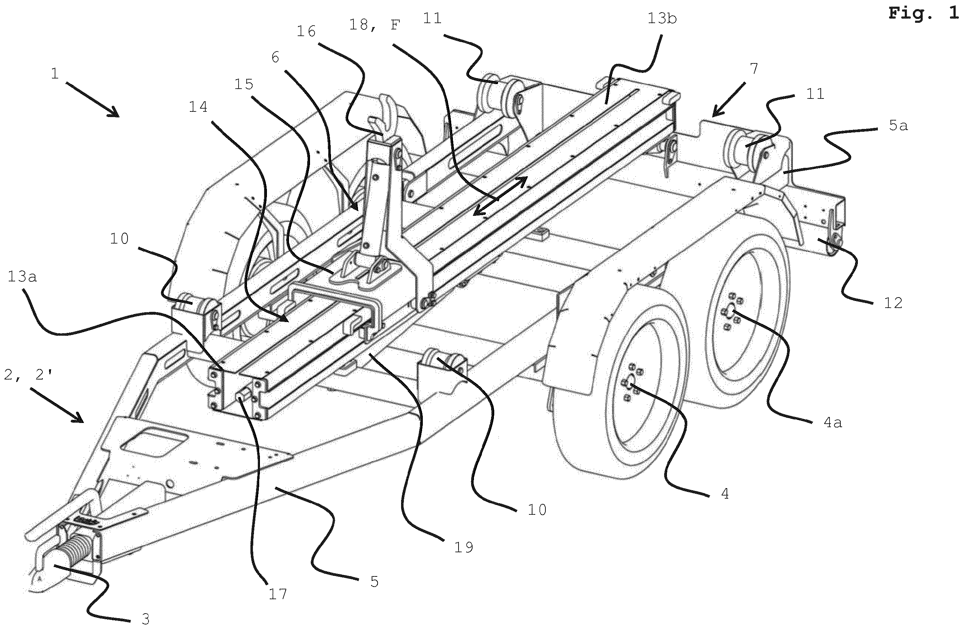

Fig. 1 zeigt eine perspektivische Darstellung einer vorgeschlagenen Vorrichtung 1 gemäß einer beispielhaften Ausgestaltung der Erfindung.

Dabei zeigt Fig. 1 die Vorrichtung 1 zum Aufladen und Abladen von Containern, insbesondere Abrollcontainern, auf ein oder von einem Rahmengestell 5 eines wenigstens eine Fahrzeugachse 4 aufweisenden Straßenfahrzeugs 2. Gemäß der Darstellung von Fig. 1 sowie in den übrigen Darstellungen ist die Erfindung am Beispiel eines Straßenfahrzeuges 2 in Form eines mittels einer Anhängerkupplung 3 an eine nicht dargestellte Zugmaschine ankoppelbaren Anhängers 2' dargestellt und beschrieben.

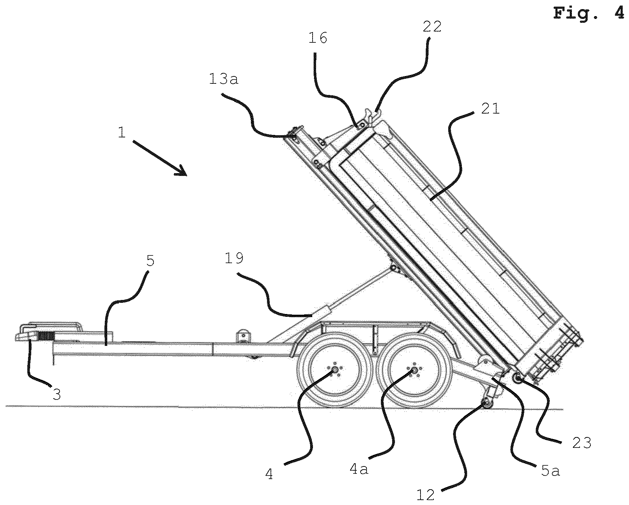

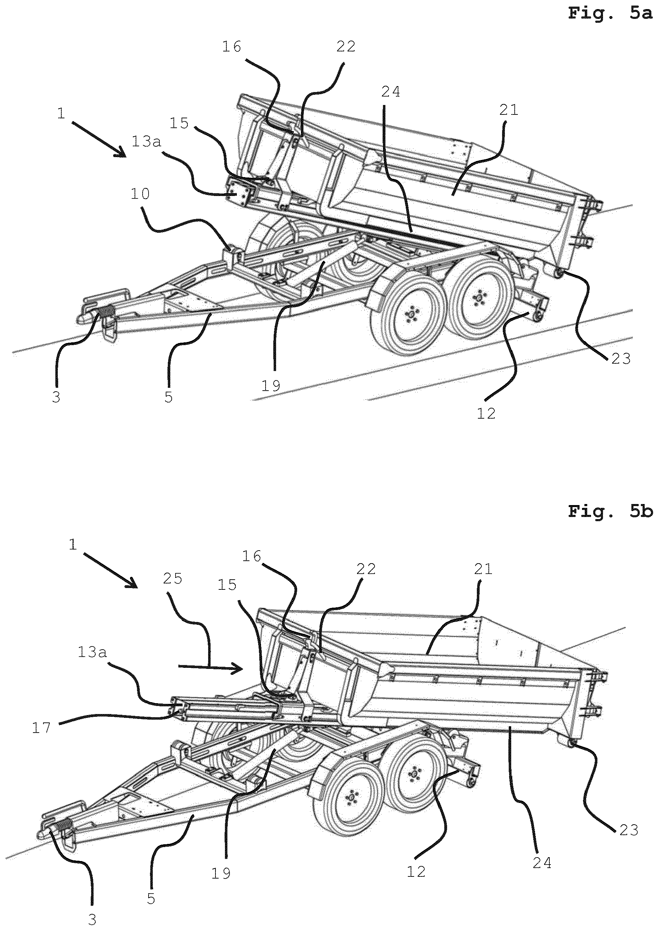

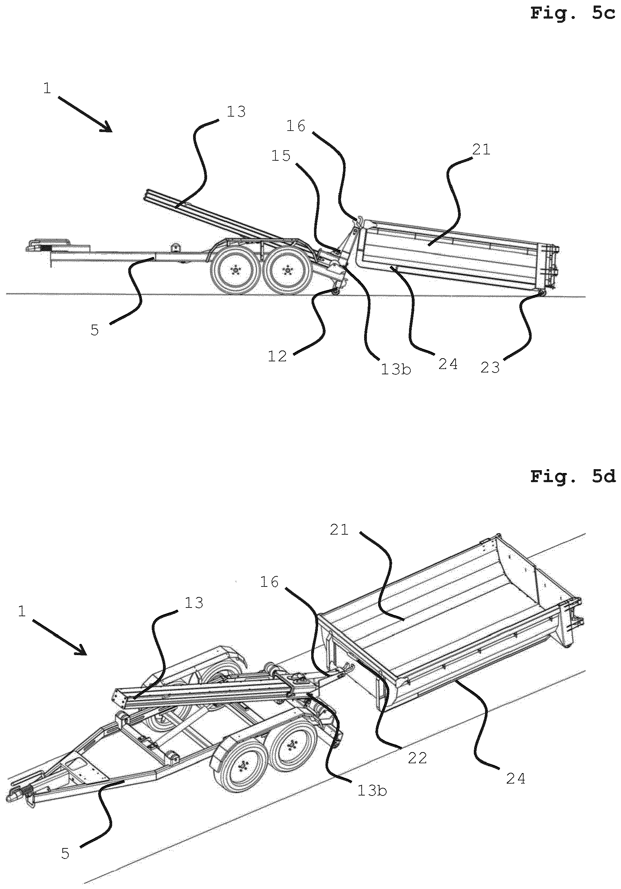

Die in Fig. 1 gezeigte Vorrichtung 1 weist eine auf einem Rahmengestell 5 der Vorrichtung 1 angeordnete kippbare und/oder schwenkbare Containerbewegungseinrichtung 6 auf, wobei auf der Containerbewegungseinrichtung 6 ferner ein Greifermittel 16 angeordnet ist. Das Greifermittel 16 ist dazu eingerichtet, während des Aufladens und Abladens ein Halteelement 22 eines lediglich in den Figuren 4, 5a bis 5d gezeigten Containers 21 zu umgreifen und den entsprechenden Container 21 zu führen. Hierzu ist das das Greifermittel 16 bevorzugt mittig auf der Containerbewegungseinrichtung 6 angeordnet.

Zur weiteren Führung eines Containers 21 während des Aufladens und des Abladens von oder auf das Rahmengestell 5 des Straßenfahrzeugs 2 sind im Bereich des hinteren Endes 5a des Rahmengestells 5 zwei seitlich angeordnete Führungsrollen 11 vorgesehen, mittels welcher der Container 21 beim Aufladen und Abladen in seiner Bewegung vor seitlichem Verrutschen gesichert werden. Hierbei greifen die Führungsrollen 11 mit einer am Boden eines entsprechenden Containers 21 vorgesehenen Kufen 24 ineinander. Zur weiteren Stabilisierung des Containers 21 auf dem Rahmengestell 5 während des Transportes sind zwei Auflagerollen 10 jeweils seitlich gegenüberliegend auf dem Rahmengestell 5 angeordnet. Hierbei ist jede der Auflagerollen 10 in Verlängerung der entsprechend auf der gleichen Seite des Rahmengestells 5 angeordneten Führungsrolle 11 positioniert.

Die Containerbewegungseinrichtung 6 weist, wie in Fig. 1 gezeigt, ferner einen Schienenträger 13 mit einem daran angeordneten beweglichen Schlitten 15 sowie ein Mittel 17 zur Längsverschiebung des Schlittens 15 entlang der Oberseite 14 des Schienenträgers 13 auf. Der Schlitten 15 ist in Längsrichtung 18 des Schienenträgers 13 zwischen einem vorderen Ende 13a und einem hinteren Ende 13b des Schienenträgers 13 hin und her verschiebbar, insbesondere linear verschiebbar.

Ferner ist in Fig. 1 dargestellt, dass das Rahmengestell 5 einen um eine Gelenkachse 8 des Rahmengestells 5 nach unten hin abknickbaren Abschnitt 7 aufweist, wobei der abknickbare Abschnitt 7 des Rahmengestells 5 in einem Bereich des hinteren Endes 5a des Rahmengestells 5 angeordnet ist. Der abknickbare Abschnitt 7 des Rahmengestells 5 weist ferner ein am hinteren Ende 5a angeordnetes Stützelement 12 auf.

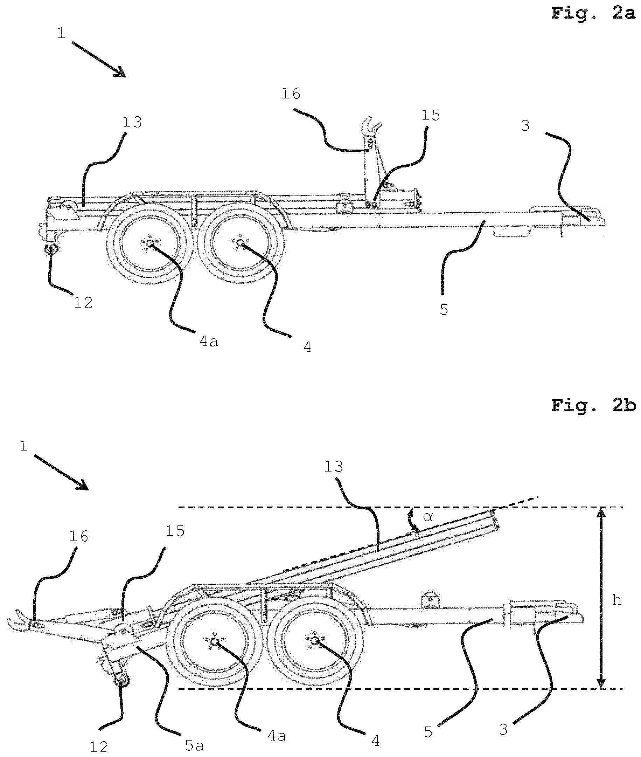

Die Figuren 2a und 2b zeigen eine schematische Darstellung einer Seitenansicht auf eine Vorrichtung 1 gemäß einer beispielhaften Ausgestaltung der Erfindung mit unterschiedlichen Stellungen der Containerbewegungseinrichtung 6.

Dabei zeigt Fig. 2a die Containerbewegungseinrichtung 6 in einer auf dem Rahmengestell 5 abgelegten oder an diesem angelegten Stellung, welche beispielsweise während des Transportes eines nicht dargestellten Containers 21 oder einer Leerfahrt eingenommen ist.

Die Fig. 2b zeigt die Containerbewegungseinrichtung 6 in einer gegenüber dem Rahmengestell 5 angewinkelten Stellung, welche beispielsweise während des Aufladens oder des Abladens eingenommen sein kann. Das Greifermittel 16 ist in der dargestellten Stellung der Containerbewegungseinrichtung 6 in Richtung des hinteren Endes 13a des Schienenträgers 13 und insbesondere über das hintere Ende 13a hinaus abgeklappt.

Der Darstellung von Fig. 2b ist ferner im Detail zu entnehmen, dass der Winkel α zwischen dem Schienenträger 13 der Containerbewegungseinrichtung 6 und dem Untergrund, auf welchem das Straßenfahrzeug 2, bzw. der Anhänger 2', steht, der minimalen Neigung entspricht, bei welcher das Stützelement 12 am hinteren Ende 5a des Rahmengestells 5 mit dem Untergrund in Kontakt gelangt. Wenn die Containerbewegungseinrichtung 6 mit eben diesem Winkel α geneigt ist, weist das vordere Ende 13a des Schienenträgers 13 eine Höhe gegenüber dem Untergrund, entsprechend einem minimalen Höhenbedarf h zum Aufladen und/oder Abladen eines Containers 21, auf.

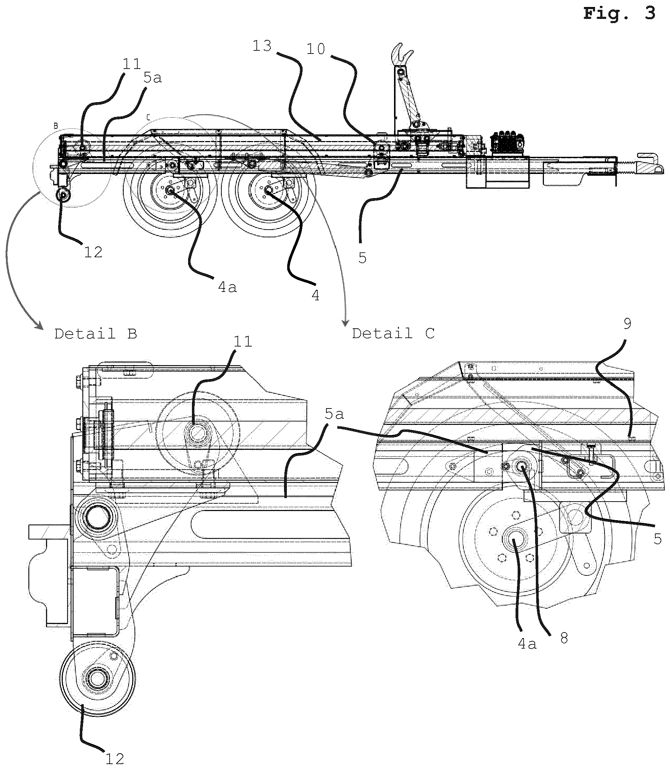

Fig. 3 zeigt eine schematische Schnittdarstellung durch ein Rahmengestell 5 gemäß einer beispielhaften Ausgestaltung der Erfindung, sowie einen lupenartig vergrößerten Ausschnitt aus der Schnittdarstellung.

Dabei zeigt Fig. 3, dass die Gelenkachse 8 des Rahmengestells 5 in einem Bereich hinter der hintersten Fahrzeugachse 4a angeordnet ist. Die Gelenkachse 8 ist gemäß diesem vorteilhaften Ausführungsbeispiel parallel zu der hintersten Fahrzeugachse 4a, sowie senkrecht zur dargestellten Bildebene angeordnet. Der abkippbare Abschnitt 5a des Rahmengestells 5 ist zur Bildung einer Kippachse beweglich mit dem hinteren Ende 13b des Schienenträgers 13 verbunden. Der Schienenträger 13 ist ferner wie dargestellt auf einem im Bereich der Gelenkachse 8 des Rahmengestells 5 angeordneten Auflageblocks 9 aufgelegt. Anders ausgedrückt, wird der abknickbare Abschnitt 7 durch seine Verbindung mit dem Schienenträger 13 in einer angehobenen Stellung gehalten, wenn der Schienenträger 13 von dem Schwenkmittel 19 über den Auflageblock 9 in eine horizontale Position bewegt wird.

Wenn zum Aufladen oder Abladen eines Containers 21 der Schienenträger 13 von dem Schwenkmittel 19 in eine gegenüber dem Rahmengestell 5 geneigte Position bewegt wird, senkt sich der in der Gelenkachse 8 gehaltene abknickbare Abschnitt 7, entsprechend eines Neigens des Schienenträgers 13 um den Auflageblock 9 herum, in Richtung des Untergrundes ab, bis das Stützelement 12 den Untergrund berührt. Zum Aufladen und Abladen eines Containers 21 kann der Schienenträger 13 in dieser Stellung verbleiben, in welcher das Stützelement 12 den Untergrund kontaktiert und der Schienenträger 13 mit seinem hinteren Ende 13b durch seine Verbindung mit dem abknickbaren Abschnitt 7 gehalten ist und sich ferner gegenüber dem Auflageblock 9 abstützt.

Soll der Container 21 jedoch ausgekippt werden, wird der Schienenträger 13 durch ein weiteres Ausfahren des Schwenkmittels 19 weiter gegenüber dem Untergrund und/oder dem Rahmengestell 5 angestellt. Hierbei verliert der Schienenträger 13, welcher sich weiter um die Kippachse bewegt, den Kontakt zum Auflageblock 9 und stützt sich fortlaufen über das Schwenkmittel 19 am Rahmengestell 5 ab.

Fig. 4 zeigt eine schematische Seitenansicht einer Vorrichtung 1 gemäß einer beispielhaften Ausgestaltung der Erfindung.

Dabei zeigt Fig. 4 die Vorrichtung 1 und insbesondere die Containerbewegungseinrichtung 6 in einer gegenüber dem Rahmengestell 5 maximal oder annähernd maximal angewinkelten Stellung, welche beispielsweise eingenommen sein kann, um den Container 21 auszukippen. Hierzu ist die Containerbewegungseinrichtung 6 in Längsrichtung um eine Kippachse kippbar. Die Kippachse ist bevorzugt am abknickbaren Abschnitt 7 am hinteren Ende 5a des Rahmengestells 5 angeordnet. Bei der Kippachse handelt es sich lediglich um eine gedachte Achse, um welche der auf dem Schienenträger 13 aufliegende und von dem Greifermittel 16 gehaltene Container 21 gekippt werden kann.

Die Containerbewegungseinrichtung 6 verfügt zum abkippen des Schienenträgers 13 zusammen mit dem Container 21 über ein Schwenkmittel 19, welches die Containerbewegungseinrichtung 6, insbesondere den Schienenträger 13, relativ zum Rahmengestell 5 verschwenkt, bzw. abkippt. Das Schwenkmittel 19 ist hierzu bevorzugt zwischen dem Rahmengestell 5 und der Containerbewegungseinrichtung 6 angeordnet und jeweils mit dem Rahmengestell 5 und dem Schienenträger 13 verbunden. Bei dem Schwenkmittel 19 kann es sich hierbei beispielsweise um einen hydraulisch betätigten Zylinder handeln.

Ferner ist der Darstellung von Fig. 4 gezeigt, dass zum Auskippen des Containers 21 ein größerer Neigungswinkel des Schienenträgers 13 eingenommen werden muss, als in der in Fig. 4b gezeigten Stellung der Containerbewegungseinrichtung 6. Zum Auskippen des Containers 21 wird ein maximaler Höhenbedarf H beansprucht, welcher in der darstellten Stellung durch den Abstand des vorderen Endes 13a des Schienenträgers 13 und/oder des Greifermittels 16 gegenüber dem Untergrund definiert ist.

Die Figuren 5a bis 5d zeigen eine schematische Darstellung einer Vorrichtung 1 gemäß einer beispielhaften Ausgestaltung der Erfindung in unterschiedlichen Phasen des Abladevorgangs und/oder Aufladevorgangs. In der Reihenfolge der Figuren beginnend von 5a zu 5d sind unterschiedliche Phasen des Abladevorgangs dargestellt. Beim Aufladevorgang werden diese Phasen in umgekehrter Reihenfolge, entsprechend Folge der Figuren von 5d zu 5a, durchgeführt.

Dabei zeigt Fig. 5a die Vorrichtung 1 in einer Stellung, in welcher der abknickbare Abschnitt 7 des Rahmengestells 5 nach unten abgeknickt wurde, so dass das Stützelement 12 des Untergrund kontaktiert. Diese Stellung, sowie auch die dementsprechende Neigung, des abknickenden Abschnitts 7 wird durch ein Anstellen des Schienenträgers 13 gegenüber dem Rahmengestell 5 erreicht, welches wiederum durch eine Betätigung des Schwenkmittels 19 bewirkt wird. Nachdem das Stützelement 12 mit Rollen den Untergrund kontaktiert hat, kann ein weiteres Anstellen des Schienenträgers 13 mittels des Schwenkmittels 19 unterbleiben. Der Vorteil ist, dass in dem Fall der Montage der Vorrichtung 1, 1' auf dem gezogenen Straßenfahrzeug eine Negativlast auf der Anhängekupplung des ziehenden Fahrzeugs vermieden ist.

Im Anschluss hieran kann, wie in Fig. 5b gezeigt, durch Betätigung der Mittel zur Längsverschiebung 17 der Schlitten 15 entlang der Oberseite 14 des Schienenträgers 13 von dem vorderen Ende 13a des Schienenträgers 13 in Richtung des hinteren Endes 13b des Schienenträgers 13 erfolgen. Hierdurch wird der von dem Greifermittel 16 gehaltene und von den Führungsrollen 11 geführte Container 21 zunächst in Richtung des Pfeils 25 verschoben. Nachdem die Rollen 23 an der hinteren unteren Kante des Containers 21 den Untergrund kontaktieren übernehmen diese die Funktion des seitlichen Abstützens des Containers 21 dessen Kufen 24 im Verlauf des weiteren Verschiebens des Containers 21 aus den Führungsrollen 11 gehoben werden.

Wenn der Schlitten 15 am hinteren Ende 13b des Schienenträgers 13 angelangt ist und der Container 21, wie in Fig. 5c dargestellt, hinter dem Anhänger 2' gehalten ist, wird das Greifermittel 16 in Richtung nach hinten über das hintere Ende 13b des Schienenträgers 13 hinweg abgeklappt. Hierzu kann beispielsweise ein hydraulisch betätigter Zylinder zum Einsatz gelangen. Durch das Abklappen des Greifermittels 16 wird der Container 21 vollständig auf dem Untergrund abgesetzt und das Greifermittel 16 kann das Halteelement 22 des Containers 21 freigeben.

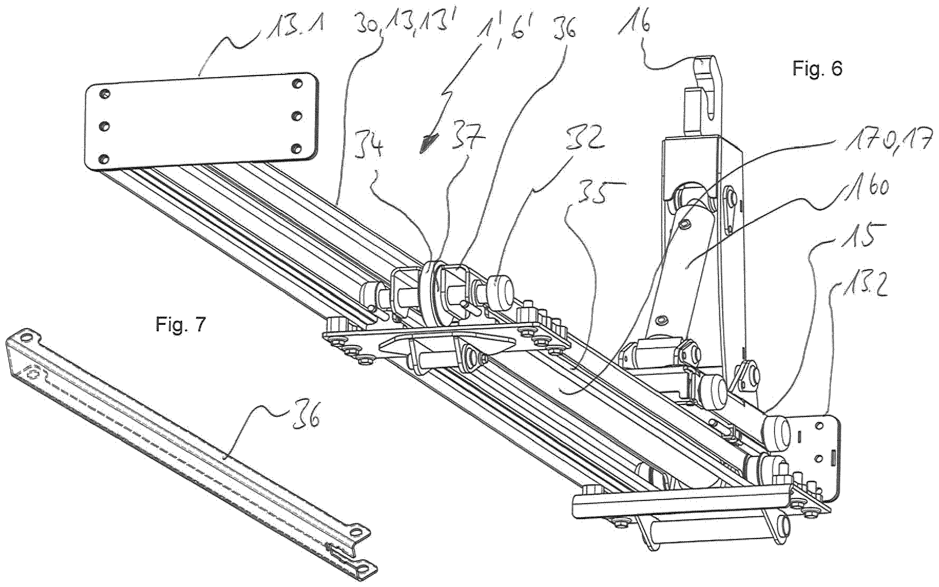

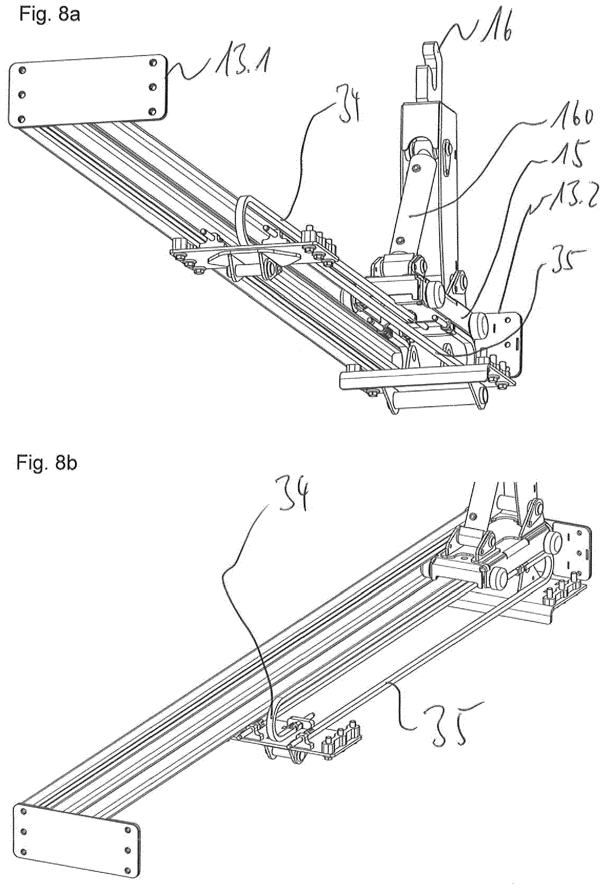

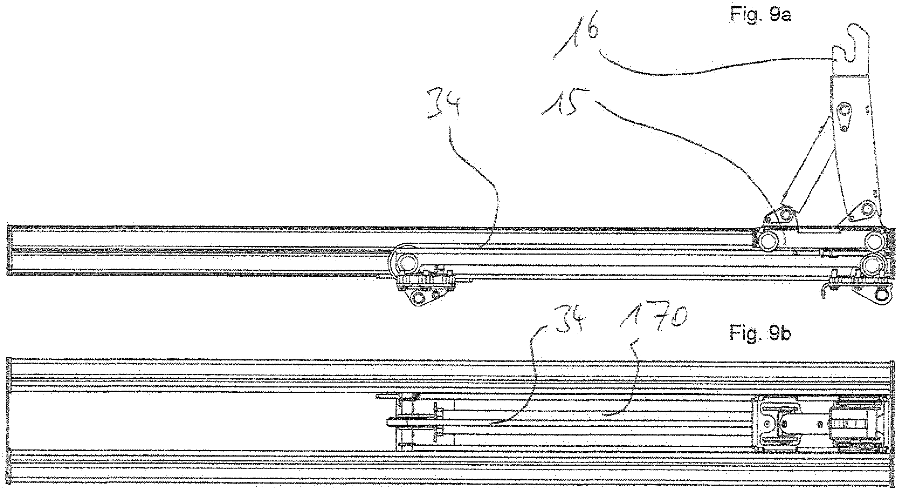

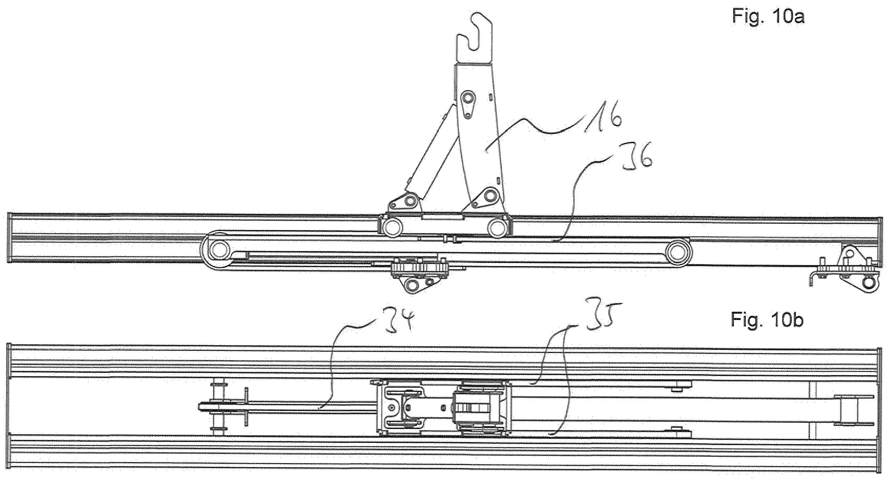

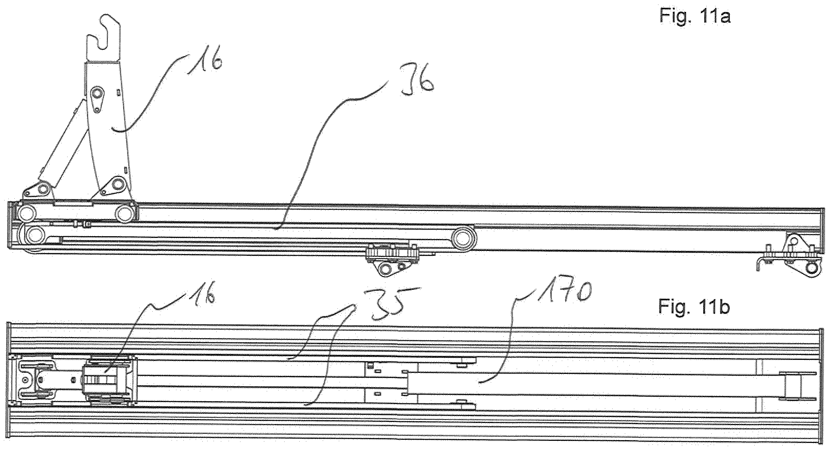

Die Figuren 6 bis 11 machen nachvollziehbar, wie eine erfindungsgemäße Vorrichtung 1' nach einem zweiten Ausführungsbeispiel funktioniert. Zumindest grob in Fahrtrichtung (F) auf dem Straßenfahrzeug ausgerichtet gestattet sie ein Aufladen bei etwa 35 ° Neigung und ein Abladen aus der Waagerechten von Containern (21). Dazu ist die Vorrichtung 1' auf dem Rahmengestell (5), in den Figuren 6 bia 11 nicht dargestellt, kippbar angeordnet. Die Vorrichtung 1' besteht zumindest im Wesentlichen aus einer Containerbewegungseinrichtung 6' mit einem Greifermittel 16, welches Greifermittel 16 dazu eingerichtet ist, während des Aufladens und Abladens des Containers 21 ein Halteelement 22 des Containers 21 zu greifen. Die Containerbewegungseinrichtung 6' hat eine zumindest grob parallel zur Fahrtrichtung F des nicht dargestellten Straßenfahrzeugs ausgerichtet angeordnete Linearführung 30 für das Greifermittel 16. Die Containerbewegungseinrichtung 6' weist weiterhin auf:
- einen Schienenträger 13, 13' mit einem darin geführten beweglichen Schlitten 15 für das Greifermittel 16, einem außerdem separat darin geführten Triebelement 32, einem freien vorderen Ende 13.1 und einem an dem Rahmengestell 5 gelenkig angebundenen hinteren Ende 13.2 und
- einen in Bewegungsrichtung des Schlittens 15 zwischen einem der Enden 13.1, 13.2 des Schienenträgers 13, 13' und dem Triebelement 32 wirkenden bidirektionalen Hubzylinder 170 als ein Mittel 17 zur Längsverschiebung des Schlittens 15.

Die in den Figuren 6 bis 11 dargestellte Containerbewegungseinrichtung weist einen Kraftwandler auf. Es kann daher ein Hubzylinder eingesetzt werden, der gegenüber dem vollen Arbeitsweg des Schlittens einen halbierten Hubweg habt.

Über bzw. neben dem Hubzylinder sind zumindest zwei Ketten 34, 35, Riemen oder dergleichen als Zugkraftübertragungsmittel angeordnet, um den Schlitten 15 und den Hubzylinder 170 miteinander zu verbinden. Den Hubzylinder 170 schützend ist ein im Querschnitt gesehen U-förmiges Distanzstück bewegbar in der Containerbewegungseinrichtung geführt. Das Distanzstück 36 hat besonders bevorzugt die halbe Länge in Bezug auf die ganze Länge des Schienenträgers 13'. Es lagert zumindest eine gegenüber dem Schienenträger 13' lose Rolle rotierbar, sodass sie als lose Rolle im Schienenträger 13' funktionieren kann. Das Distanzstück 36 wird erfindungsgemäß mittels des Hubzylinders 170 zwischen den Enden 13.1, 13.2 des Schienenträgers 13' hin und her bewegt.

Das Distanzstück 36 lagert jedoch bevorzugt an beiden Enden je zumindest eine Rolle 37 rotierbar, wobei die zumindest zwei Rollen 37 immer gleich zueinander beabstandet an fester Stelle des Distanzstücks 36 gelagert sind. Egal zu welchem Ende des Schienenträgers 13' hin dabei das Distanzstück 36 bewegt wird, legt der mit einem über die jeweilige lose Rolle abrollenden Seil oder dergleichen verbundene Schlitten 15 den zumindest beinahe doppelten Weg des Distanzstücks 36 zurück.

Die vorliegend drei in der Containerbewegungseinrichtung 6' geführte Rollen 37, hier in eine Kette eingreifende Zahnräder, übertragen auf vorliegend drei Ketten die Kraft des einen einzigen für die Längsverschiebung des Schlittens zuständigen Hubzylinders 170. Sie wirken mithin mechanisch zwischen dem Schlitten 15 und dem Hubzylinder 170.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt.

In den Schutzansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Schutzansprüchen genannten Einheiten bzw. Einrichtungen ausführen.

### Bezugszeichenliste:

- 1, 1': Vorrichtung
- 2: Straßenfahrzeug
- 2': Anhänger
- 3: Anhängerkupplung
- 4: Fahrzeugachse
- 4a: hinterste Fahrzeugachse
- 5: Rahmengestell
- 5a: hinteres Ende (des Rahmengestells)
- 6, 6': Containerbewegungseinrichtung
- 7: abknickbarer Abschnitt
- 8: Gelenkachse (des Rahmengestells)
- 9: Auflageblock

- 10: Auflagerollen
- 11: Führungsrollen
- 12: Stützelement
- 13, 13': Schienenträger
- 13a, 13.1: vorderes Ende (des Schienenträgers)
- 13b, 13.2: hinteres Ende (des Schienenträgers)
- 14: Oberseite (des Schienenträgers)
- 15: Schlitten
- 16: Greifermittel
- 17: Mittel zur Längsverschiebung
- 18: Längsrichtung (der Containerbewegungseinrichtung)
- 19: Schwenkmittel

- 21: Container
- 22: Halteelement (des Containers)
- 23: Rolle
- 24: Kufe
- 25: Pfeil
- 30: Linearführung
- 32: Triebelement
- 34: Seil, Kette
- 35: Seil, Kette
- 36: Distanzstück
- 37: Rolle, Zahnrad

- 170: Hubzylinder
- 160: Hubzylinder

- F: Fahrtrichtung
- h: minimaler Höhenbedarf (zum Aufladen oder Abladen)
- H: maximaler Höhenbedarf (zum Kippen)
- α: maximaler Neigungswinkel

## Patentansprüche

1. Straßenfahrzeug (2) mit einer Vorrichtung (1, 1') zum zumindest grob in Fahrtrichtung (F) ausgerichteten Aufladen und Abladen von Abrollcontainern (21) auf ein oder von einem Rahmengestell (5) des wenigstens eine Radachse (4, 4a) aufweisenden Straßenfahrzeugs (2),
1.1 wobei in einem Bereich eines hinteren Endes (5a) des Rahmengestells (5) zwei seitlich angeordnete Führungsrollen (11) zur Führung des Containers (21) vorgesehen sind, welche Führungsrollen (11) mit am Boden des Containers (21) angeordneten Kufen (24) ineinandergreifen, und über welches Ende des Rahmengestells (5) hinweg der Abrollcontainer (21) aufgeladen und abgeladen wird,
1.2 zumindest aufweisend eine auf dem Rahmengestell (5) angeordnete, kippbare und/oder schwenkbare Containerbewegungseinrichtung (6, 6')
1.2.1 mit einem Greifermittel (16), welches Greifermittel (16) dazu eingerichtet ist, während des Aufladens und Abladens des Containers (21) ein Halteelement (22) des Containers (21) zu greifen,
1.2.2 mit einer zumindest grob parallel zur Fahrtrichtung (F) ausgerichtet angeordneten Linearführung (30) für das Greifermittel (16),
**dadurch gekennzeichnet, dass**
1.3 das Rahmengestell (5) einen um eine parallel zur Radachse (4, 4a) angeordnete Gelenkachse (8) abknickbaren Abschnitt (7) aufweist, wobei die Gelenkachse (8) und damit der abknickbare Abschnitt (7) des Rahmengestells (5) in einem Bereich des hinteren Endes (5a) des Rahmengestells (5) angeordnet ist, nämlich hinter der in Vorwärtsfahrtrichtung gedacht hintersten Fahrzeugachse (4a) angeordnet ist, und dass
1.4 die Containerbewegungseinrichtung (6, 6') aufweist
1.4.1 einen Schienenträger (13, 13') mit einem darin geführten beweglichen Schlitten (15) für das Greifermittel (16), einem außerdem separat darin geführten Triebelement (32), einem freien vorderen Ende (13.1) und einem an dem Rahmengestell (5) gelenkig angebundenen hinteren Ende (13.2) und
1.4.2 einen in Bewegungsrichtung des Schlittens (15) zwischen einem der Enden (13.1, 13.2) des Schienenträgers (13, 13') und dem Triebelement (32) wirkenden bidirektionalen Hubzylinder (170) als ein Mittel (17) zur Längsverschiebung des Schlittens (15),
1.5 wobei der abknickbare Abschnitt (7) mit dem Schienenträger (13) verbunden ist, nämlich mit dessen an den abknickbaren Abschnitt (7) angebundenen hinteren Ende (13.2), und wobei der abknickbare Abschnitt(7) der Gelenkachse (8) gegenüberliegend unten ein Stützelement (12) und oben die gelenkige Aufnahme des Schienenträgers (13) aufweist.

2. Straßenfahrzeug (2) nach Anspruch 1, **dadurch gekennzeichnet, dass** die Containerbewegungseinrichtung einen Kraftwandler aufweist.

3. Straßenfahrzeug (2) nach einem der Ansprüche 1 oder 2, **dadurch gekennzeichnet, dass** zumindest zwei Ketten (34, 35), Riemen oder dergleichen Zugkraftübertragungsmittel den Schlitten (15) und den Hubzylinder (170) verbinden.

4. Straßenfahrzeug (2) nach einem der vorangehenden Ansprüche, **dadurch gekennzeichnet, dass** ein Distanzstück, das insbesondere als U-Schiene den Hubzylinder (170) schützend ausgeführt ist, mit besonders bevorzugt halber Länge in Bezug auf die ganze Länge des Schienenträgers (13'), zumindest eine gegenüber dem Schienenträger (13') lose Rolle rotierbar lagert, wobei das Distanzstück mittels des Hubzylinders (170) zwischen den Enden (13.1, 13.2) des Schienenträgers (13') hin und her bewegbar ist.

5. Straßenfahrzeug (2) nach Anspruch 4, **dadurch gekennzeichnet, dass** das Distanzstück (36) an beiden Enden je zumindest eine Rolle (37) rotierbar lagert, wobei die zumindest zwei Rollen immer gleich zueinander beabstandet an fester Stelle des Distanzstücks gelagert sind, sodass egal zu welchem Ende des Schienenträgers (13') hin das Distanzstück bewegt wird, der mit einem über die jeweilige lose Rolle abrollenden Seil oder dergleichen verbundene Schlitten (15) den zumindest beinahe doppelten Weg des Distanzstücks zurücklegt.

6. Straßenfahrzeug (2) nach einem der vorangehenden Ansprüche, **dadurch gekennzeichnet, dass** zumindest zwei voneinander immer gleich zueinander beabstandet in der Containerbewegungseinrichtung geführte Rollen, insbesondere Zahnräder, auf zumindest zwei Seile, Ketten oder dergleichen die Kraft des Hubzylinders übertragen, um zwischen dem Schlitten (15) und dem Hubzylinder (170) zu wirken.

7. Straßenfahrzeug (2) gemäß einem der vorangehenden Ansprüche, wobei das Greifermittel (16) in Richtung des hinteren Endes (5a) des Rahmengestells (5) abklappbar ist, insbesondere mittels eines weiteren Hubzylinders (160) oder gegen die Kraft einer Feder.

8. Straßenfahrzeug (2) gemäß einem der vorangehenden Ansprüche, wobei das Straßenfahrzeug (2) ein an eine Zugmaschine ankoppelbarer Anhänger (2') ist.

## Claims

1. A road vehicle (2), comprising a device (1, 1') for loading and unloading roll-off containers (21) onto or from a rack (5) of the road vehicle (2) comprising at least one wheel axle (4, 4a), aligned at least roughly in the traveling direction (F),
1.1 wherein, in an area of a rear end (5a) of the rack (5), two laterally arranged guide rollers (11) are provided to guide the container (21), wherein the guide rollers (11) interlock with skids (24) arranged on the floor of the container (21), with the roll-off container (21) being loaded and unloaded over this end of the rack (5),
1.2 having at least a tipping and/or swiveling container movement device (6, 6') arranged on the rack (5)
1.2.1 with a gripping means (16), wherein the gripping means (16) is set up to grip a holding element (22) of the container (21) while the container (21) is loaded and unloaded,
1.2.2 with a linear guide (30) for the gripping means (16) being arranged at least roughly in parallel to the traveling direction (F)
**characterized in that**
1.3 the rack (5) has a section (7) that can be folded around an joint axis (8) arranged in parallel with the wheel axle (4, 4a), wherein the joint axis (8), and, therefore, the folding section (7) of the rack (5) are arranged in an area of the rear end (5a) of the rack (5), specifically behind the rear-most vehicle axle (4a) when viewed in the forward traveling direction, and **in that**
1.4 the container movement device (6, 6') has
1.4.1 a rail carrier (13, 13') with a movable carriage (15) guided in it for the gripping means (16), a driving element (32) additionally separately guided in it, a free front end (13.1) and a rear end (13.2) with articulated connection to the rack (5), and
1.4.2 a bidirectional lifting cylinder (170) acting in the movement direction of the carriage (15) between one of the ends (13.1, 13.2) of the rail carrier (13, 13') and the driving element (32) as a means (17) for longitudinal shifting of the carriage (15),
1.5 wherein the folding section (7) is connected to the rail carrier (13), specifically to its rear end (13.2) connected to the folding section (7), and wherein the folding section (7) of the joint axis (8) has a supporting element (12) at the bottom and the articulated holder of the rail carriers (13) at the top facing each other.

2. The road vehicle (2) according to claim 1, **characterized in that** the container movement device has a force converter.

3. The road vehicle (2) according to one of claims 1 or 2, **characterized in that** at least two chains (34, 35), belts or similar means of traction transfer connect the carriage (15) and the lifting cylinder (170).

4. The road vehicle (2) according to any one of the preceding claims, **characterized in that** a spacer that is in particular designed as a U rail protecting the lifting cylinder (170), particularly preferably having half the length in reference to the entire length of the rail carrier (13'), supports at least one movable roller so that it can rotate against the rail carrier (13'), in which the spacer can be moved back and forth between the ends (13.1, 13.2) of the rail carrier (13') by the lifting cylinder (170).

5. The road vehicle (2) according to claim 4, **characterized in that** the spacer (36) rotatably supports at least one roller (37) on either of the two ends, wherein the at least two rollers are supported in a fixed location of the spacer, always at the same distance from each other, so that the carriage (15) connected to a rope rolling off across the respective movable roller or the like travels at least nearly twice the distance as the spacer, no matter the end of the rail carrier (13') to which the spacer is moved.

6. The road vehicle (2) according to any one of the preceding claims, **characterized in that** at least two rollers that are guided in the container moving device always at the same distance from each other, in particular gears, transfer the force of the lifting cylinder to at least two ropes, chains or the like, in order to act between the carriage (15) and the lifting cylinder (170).

7. The road vehicle (2) according to any one of the preceding claims, wherein the gripping means (16) can be folded away in the direction of the rear end (5a) of the rack (5), in particular using another lifting cylinder (160) or against the force of a spring.

8. The road vehicle (2) according to any one of the preceding claims, wherein the road vehicle (2) is a trailer (2') that can be connected to a tractor.

## Revendications

1. Véhicule routier (2) avec un dispositif (1, 1') pour le chargement et le déchargement de conteneurs roulants (21) au moins approximativement alignés dans le sens de la marche (F) sur ou à partir d'un châssis (5) du véhicule routier (2) possédant au moins un essieu (4, 4a),
1.1 dans lequel, deux galets de guidage disposés latéralement (11) sont prévus dans une zone d'une extrémité arrière (5a) du châssis (5), pour guider le conteneur (21), lesquels galets de guidage (11) s'engagent avec des patins (24) disposés au fond du conteneur (21), et le conteneur roulant (21) étant chargé et déchargé sur cette même extrémité du châssis (5),
1.2 comprenant au moins un dispositif de déplacement de conteneurs (6, 6') inclinable et/ou pivotant disposé sur le châssis (5)
1.2.1 avec un moyen de préhension (16), lequel moyen de préhension (16) est configuré pour saisir un élément de retenue (22) du conteneur (21) pendant le chargement et le déchargement de ce même conteneur (21),
1.2.2 avec un guide linéaire (30) au moins grossièrement parallèle au sens de déplacement (F) pour le moyen de préhension (16),
**caractévrisé en ce** que
1.3 le châssis (5) comporte une section (7) repliable autour d'un axe articulé (8) parallèle à l'essieu (4, 4a), l'axe articulé (8) et ainsi la section repliable (7) du châssis (5) disposés dans une zone de l'extrémité arrière (5a) du châssis (5), à savoir derrière l'essieu du véhicule le plus en arrière (4a) prévu dans le sens de la marche avant, et que
1.4 le dispositif de déplacement de conteneurs (6, 6') présente
1.4.1 un support de rails (13, 13') avec un coulisseau mobile (15) guidé à l'intérieur pour les moyens de préhension (16), un élément d'entraînement (32) guidé en plus à l'intérieur, une extrémité avant libre (13.1) et une extrémité arrière (13.2) articulée au niveau du châssis (5) et
1.4.2 un vérin de levage bidirectionnel (170) agissant dans le sens de déplacement du coulisseau (15) entre l'une des extrémités (13.1, 13.2) du support de rails (13, 13') et l'élément d'entraînement (32) comme un moyen (17) de déplacement longitudinal du coulisseau (15),
1.5 dans lequel la section repliable (7) est connectée au support de rails (13), à savoir avec son extrémité arrière (13.2) connectée à la section repliable (7), et dans lequel la section repliable (7) opposée à l'axe articulé (8) est un élément d'appui en bas (12) et le logement articulé du support de rails (13).

2. Véhicule routier (2) selon la revendication 1, **caractérisé en ce que** le dispositif de déplacement de conteneurs comporte un convertisseur de force.

3. Véhicule routier (2) selon l'une des revendications 1 ou 2, **caractérisé en ce qu'**au moins deux chaînes (34, 35), courroies ou moyens de transmission de force de traction similaires relient le coulisseau (15) et le vérin de levage (170).

4. Véhicule routier (2) selon l'une des revendications précédentes, **caractérisé en ce qu'**une entretoise, qui est conçue notamment comme un rail en U pour protéger le vérin de levage (170), de préférence de la moitié de la longueur totale du support de rails (13'), au moins un galet mobile par rapport au support de rails (13') est monté sur paliers rotatifs, l'entretoise étant mobile d'avant en arrière entre les extrémités (13.1, 13.2) du support de rails (13') au moyen du vérin de levage (170).

5. Véhicule routier (2) selon la revendication 4, **caractérisé en ce que** l'entretoise (36) supporte en rotation au moins un galet (37) aux deux extrémités, à condition qu'au moins deux galets soient toujours à égale distance l'un de l'autre à un emplacement fixe de l'entretoise, de sorte que, quelle que soit l'extrémité du support de rails (13 '), l'entretoise est déplacée, le coulisseau (15) relié par un câble ou similaire roulant sur le galet mobile respectif couvre au moins presque le double de la course de l'entretoise.

6. Véhicule routier (2) selon l'une des revendications précédentes, **caractérisé en ce qu'**au moins deux galets, notamment des roues dentées, guidés dans le dispositif de déplacement de conteneurs toujours à égale distance l'un de l'autre, transmettent la force du vérin de levage à au moins deux câbles, chaînes ou similaires pour agir entre le coulisseau (15) et le vérin de levage (170).

7. Véhicule routier (2) selon l'une des revendications précédentes, où les moyens de préhension (16) en direction de l'extrémité arrière (5a) du châssis (5) peuvent être rabattus, notamment au moyen d'un autre vérin de levage (160) ou contre la force d'un ressort.

8. Véhicule routier (2) selon l'une des revendications précédentes, où le véhicule routier (2) est une remorque (2') qui peut être attelée à un tracteur.
